# EUROPÄISCHE PATENTSCHRIFT

(11) **EP 3 680 160 B1**
(45) Veröffentlichungstag und Bekanntmachung des Hinweises auf die Patenterteilung: **15.09.2021**
(21) Anmeldenummer: 20160229.9
(22) Anmeldetag: 18.04.2013
(51) Int. Cl.: B62K 27/12, B60D 1/02, B60D 1/52

(54) **SELBSTVERRIEGELNDE KOMPAKT-KUPPLUNG**
SELF-LOCKING COMPACT COUPLING
EMBRAYAGE COMPACT À VERROUILLAGE AUTOMATIQUE

(30) Priorität: 18.04.2012 DE 102012103404
(43) Veröffentlichungstag der Anmeldung: 15.07.2020
(62) Teilanmeldung aus: 17204030.5
(73) Patentinhaber: Croozer GmbH, 50825 Köln (DE)
(72) Erfinder: Bossel, Derk, 34289 Zierenberg (DE)
(74) Vertreter: Lenzing Gerber Stute

(56) Entgegenhaltungen:
- EP-A1- 2 386 473
- WO-A1-98/21057
- WO-A1-2010/105286
- CN-Y- 2 294 913
- DE-A1- 4 427 036
- DE-A1- 19 609 910
- DE-U1- 9 308 490
- GB-A- 2 266 869
- US-A- 5 470 088
- US-A1- 2006 076 380
- US-B1- 7 131 657
- US-E- R E26 806

## Beschreibung

Die Erfindung betrifft eine Kupplung zum Verbinden eines mindestens eine Deichsel aufweisenden Anhängers mit einem nicht motorisierten Fahrzeug oder einem lediglich einen Hilfsantrieb aufweisenden Fahrzeug, insbesondere einem Fahrrad bzw. einem Pedelec, mit zwei zusammenwirkenden und voneinander lösbaren Kupplungsteilen, von denen das eine ortsfest mit dem Fahrzeug und das andere mit der Deichsel verbunden ist, gemäß den Merkmalen des Oberbegriffs des Anspruchs 1.

Kupplungen zum Verbinden der Deichsel eines Fahrradanhängers mit einem Fahrrad sind hinlänglich bekannt. Üblicherweise werden sie entweder zentral unterhalb des Sattels am Fahrradrahmen oder an der Sattelstütze oder seitlich an der Hinterradgabel aus Kettenstrebe und Sitzstrebe bzw. direkt am Hinterrad des Fahrrades befestigt.

So ist aus der DE 299 09 176 U1 eine Anhängerkupplung mit einem an einem Fahrradrahmen unterhalb des Sattels zu befestigenden Kugelkopf bekannt, der in einen am vorderen Ende einer Deichsel vorgesehenen Kupplungskörper eingeführt werden kann. Der Kugelkopf wird in einer Kugelpfanne im Kupplungskörper durch ein sogenanntes Sicherungsrohr gehalten, das sich mithilfe einer sich am Deichselende abstützenden Feder über den Kupplungskörper schiebt. Zum Einsetzen des Kugelkopfes in den Kupplungskörper bzw. zum Lösen des Kugelkopfes aus dem Kupplungskörper ist das Sicherungsrohr entgegen der Federkraft in Richtung zum Fahrradanhänger zurückzuschieben, so dass die Kugelpfanne im Kupplungskörper frei zugänglich ist. Derartige Kupplungen haben unter anderem den grundsätzlichen Nachteil, dass der Gepäckträger des Fahrrads nicht mehr oder zumindest nur sehr beschränkt nutzbar ist, da die Deichsel über den Gepäckträger geführt wird. Ein weiterer grundsätzlicher Nachteil besteht in dem relativ hohen Krafteinleitungspunkt, der beim Schieben des Anhängers das Hinterrad des Fahrrads erheblich entlastet und das Fahrrad auch aushebeln kann.

Einen bedeutsamen praktischen Nachteil haben zudem alle Kupplungen, die am Sattelrohr in Höhe der Sitzstreben anzubringen sind, da durch die Vielzahl von unterschiedlichen Rahmenformen und -bauweisen eine sichere und einfache Montage solcher Kupplungen häufig nicht gelingt.

Aus der DE 196 09 910 A1 ist eine Kupplung zum seitlichen Anhängen eines Fahrradanhängers mit einer Seitendeichsel an einem Fahrradrahmen bekannt, die ein Deichselanschlussteil und ein damit lösbar verbundenes Fahrradanschlussteil aufweist. Das Deichselanschlussteil ist im eingekuppelten Zustand in mindestens drei Drehachsen gelenkig mit dem Fahrradanschlussteil verbunden. Die Kupplung ist als Steckkupplung ausgebildet. Sie weist eine Kupplungsbuchse als erstes, zum Deichselanschlussteil gehöriges Kupplungsteil auf. In der Kupplungsbuchse sind federelastische Zungen mit Rastnasen angeordnet. Damit zusammen wirkt ein Bolzenstück als zweites Kupplungsteil, das Bestandteil des Fahrradanschlussteils ist. Das Bolzenstück kann axial in die Kupplungsbuchse eingeschoben werden, bis dass die Rastfedern in eine umlaufende Nut des Bolzenstücks eingreifen. Das Bolzenstück ist in der Buchse frei drehbar gelagert. Das Fahrradanschlussteil weist zwei weitere Drehgelenke auf, von denen ein erstes an einem abgewinkelten Ende eines an der Kettenstrebe und der Sitzstrebe eines Fahrradrahmens befestigten Anschlussstücks angeordnet ist. Das zweite Drehgelenk sitzt zwischen dem ersten Drehgelenk und der Kupplung und ist mit dem ersten Drehgelenk über ein Versatzstück verbunden. Nachteilig an dieser Kupplung sind der vergleichsweise hohe Aufwand zum Befestigen der Kupplung am Fahrradrahmen und die vergleichsweise hohe, am Fahrrad auch im anhängerfreien Betrieb mitzuführende Masse. Des Weiteren nachteilig sind Drehmomente, die bauartbedingt durch Schub- und Zugbewegungen auf die Befestigungsplatte der fahrradseitigen Kupplung wirken, welche in ungünstigen Fällen zu einem Lösen der Befestigungsmittel führen können, welche die Befestigungsplatte am Fahrrad fixieren.

Aus der US 6,099,088 ist eine weitere Anhängerkupplung für einen Fahrradanhänger bekannt. Sie weist ein am Ende einer Schnellspannnabe angeordnetes, am Schnellspanner fest verbundenes erstes Kupplungsbefestigungsteil, das mit einem Wälzlager auf dem ersten Kupplungsbefestigungsteil gelagert und um die Längsachse der Nabe rotierbar ist, sowie ein darauf angeordnetes zweites Kupplungsbefestigungsteil auf, welches eine Aufnahme für einen Steckbolzen hat. Auch das kupplungsseitige Ende der Deichsel weist eine damit zusammenwirkende Aufnahme für den Steckbolzen auf. Zur Verbindung der Deichsel mit dem zweiten Kupplungsbefestigungsteil wird der Bolzen radial zur Nabenachse in die Aufnahmen eingesetzt. Die Deichsel ist dann um die Bolzenachse herum verschwenkbar. Der Bolzen wird in der Aufnahme mit Hilfe einer Sicherungsfeder gesichert. Die Kupplung ist ausschließlich für Schnellspannaben konzipiert und nicht für Fahrräder mit Vollachsen einsetzbar.

Aus der CN 2 294 913 Y ist eine Kupplung der eingangs genannten Art bekannt. Sie weist einen Bolzen mit zylindrischer Mantelfläche sowie einer auf den Bolzen aufsteckbaren und den Bolzen zumindest teilweise umgreifenden Buchse als zusammenwirkende Kupplungsteile auf, wobei die Buchse mindestens eine Öffnung zum Einsetzen des Bolzens aufweist und die miteinander verbundenen Kupplungsteile um ihre gemeinsame Längsachse herum relativ zueinander drehbar sind und als Drehgelenk mit einem Freiheitsgrad wirken. Als Verriegelungsmittel weisen die Kupplungsteile einen Schieber, der an der Buchse federnd gelagert ist, sowie eine am Bolzen ausgebildete umlaufende Nut auf, wobei eine Stirnseite des Bolzens kegelförmig ausgebildet ist, so dass der Schieber beim Einsetzen des Bolzens in die Buchse zunächst von der Stirnseite des Bolzens entgegen einer Federkraft beiseitegeschoben wird und dann aufgrund der Federkraft in der umlaufenden Nut einrastet.

Aus der US RE 26,806 E ist außerdem eine Kupplung bekannt, bei der auf einen an einem Fahrrad montierten, querstehenden Bolzen ein Buchsenstück aufgesetzt wird. Das Buchsenstück wird auf dem Bolzen durch ein zweites Buchsenstück gesichert. Hierfür sind im zweiten Buchsenstück und im Bolzen Bohrungen vorgesehen sind, in die ein Sicherungssplint eingesetzt werden kann.

Aus der US 2006/0076380 A1 ist eine Kupplung gemäß dem Oberbegriff des Anspruchs 1 bekannt. Die Kupplung weist einen Bolzen auf, der mit dem Ausfallende eines Fahrradrahmens fest verbunden werden kann, und zum anderen ein C-förmiges Basiselement, in das der Bolzen einsetzbar ist. Wenn der Bolzen in das Basiselement eingesetzt ist, kann er darin durch einen am Basiselement in einer Nut drehbar geführten Rotor verriegelt werden. Der Rotor kann in einer offenen, das Basiselement nicht verriegelnden Position sowie in einer geschlossenen, das Basiselement verriegelnden Position einrasten. Am Rotor ist ein Handgriff vorgesehen, mit dem der Rotor manuell in die beiden Positionen gebracht werden.

Bei den drei letztgenannten vorbekannten Kupplungen ist deichselseitig mindestens ein weiteres Drehgelenk zum Erzeugen mindestens eines weiteren Freiheitsgrades vorgesehen.

Die Aufgabe der Erfindung besteht darin, eine Kupplung der eingangs genannten Art zur Verfügung zu stellen, die die oben genannten Nachteile nicht aufweist.

Diese Aufgabe wird bei einer Kupplung der eingangs genannten Art mit den Merkmalen des Anspruchs 1 gelöst.

Unter einem ortsfesten Kupplungsteil wird hier und im Folgenden ein solches verstanden, das seine Position gegenüber dem Fahrzeugrahmen nicht verändert. Hierdurch wird jedoch nicht ausgeschlossen, dass der ortsfeste Kupplungsteil um seine Längsachse drehbar gelagert sein kann.

Unter einer Buchse wird hier und im Folgenden ein Bauteil verstanden, dass geeignet ist, den Bolzen im gekoppelten Zustand in Bezug auf die Lage seiner Längsachse sicher aufzunehmen. Sie kann den Bolzen teilweise ummanteln, aber auch lediglich aus zwei oder mehreren, axial zueinander beabstandeten, ringförmigen Einfassungen für den Bolzen bestehen. Sie kann so ausgebildet sein, dass darin auch Verriegelungsmittel zum Sichern des Bolzens in der Buchse untergebracht sind.

Das ortsfeste Kupplungsteil kann sowohl der Bolzen als auch die Buchse zur Aufnahme des Bolzens sein. Bei beiden Elementen besteht der besondere Vorteil darin, dass sie auf einfache Weise beispielsweise im Bereich des Ausfallendes eines Fahrradrahmens oder am Ende einer Radachse befestigt, beispielsweise verschraubt, werden können, sofern sie entsprechende Außen- oder Innengewinde haben, die wahlweise mit dem Gewinde am Ende einer Radachse oder einer am Ausfallende gegengelagerten Schraube zusammenwirken.

Der Bolzen der erfindungsgemäßen Kupplung kann, je nach Ausführungsform, beispielsweise axial oder radial zur Längsachse der Buchse in diese eingesetzt werden. Dabei sorgen in einer bevorzugten Ausführungsform die Verriegelungsmittel dafür, dass der Bolzen automatisch in der Buchse sicher festgehalten wird, sobald er beim Einsetzen eine bestimmte Position erreicht hat. Ist der Bolzen in die Buchse eingesetzt und mit den Verriegelungsmitteln verriegelt, sind Bolzen und Buchse um ihre Längsachse herum relativ beweglich, so dass der durch Bolzen und Buchse gebildete Teil der Kupplung einen Freiheitsgrad hat.

Durch ein weiteres, deichselseitiges Gelenk, das insbesondere ein kardanisches Gelenk sein kann, wird gewährleistet, dass alle Bewegungen der Deichsel von der Kupplung aufgenommen werden können.

Ein wesentlicher Vorteil der erfindungsgemäßen Kupplung besteht darin, dass nur ein Minimum an Kupplungsteilen - in bevorzugter Ausführung nur ein einziges Bauteil - am Fahrzeug verbleibt, wenn die Kupplung einmal gelöst ist. So erfolgt die Auftrennung der Kupplung an der Stelle der Bereitstellung ihres - vom Fahrzeug aus gesehen - ersten Freiheitsgrades. Dies ist insbesondere ein großer Vorteil gegenüber der aus der DE 196 09 910 A1 bekannten Kupplung, bei der nahezu alle für die mit der Kupplung bereitgestellten drei Freiheitsgrade notwendigen Kupplungsteile am Fahrzeug verbleiben, selbst wenn die Kupplung gelöst ist. Dies ist aber auch ein Vorteil gegenüber der aus der US 6,099,008 bekannten Kupplung, bei der die Auftrennung der Kupplung an ihrem - vom Fahrrad aus gezählt - zweiten Freiheitsgrad erfolgt.

Vorzugsweise wird das fahrzeugseitige Kupplungsteil axial zur Achse der Radnabe angeordnet, und es weist darüber hinaus bevorzugt Mittel zu seiner Befestigung am Ende einer Radnabe auf. Diese Mittel können vorteilhafterweise darin bestehen, dass die Buchse ein Innengewinde oder der Bolzen in Richtung seiner Längsachse eine Gewindebohrung aufweist, mit dem die Buchse bzw. der Bolzen auf ein Ende der Radnabe oder eine am Fahrzeug gegengelagerte Verbindungsschraube aufgeschraubt werden kann. Hier wird ein weiterer grundsätzlicher Vorteil der Erfindung deutlich. So kann durch die relative Beweglichkeit zwischen Bolzen und Buchse kein Drehmoment auf das fahrzeugseitige Kupplungsteil aufgebracht werden. Deswegen kann es wahlweise neben einer Radmutter auf das Ende der Radachse aufgeschraubt werden oder sogar die Funktion des Radbefestigungsmittels, sei es als Radmutter bei Vollachsen oder als Gegenmutter bei Schnellspannachsen, übernehmen.

Weist das fahrzeugseitige Kupplungselement eine ausreichende Dicke auf, kann es vergleichsweise kurz ausgeführt werden, so dass es kaum über das Ausfallende des Fahrzeugrahmens auskragt.

Insbesondere bei erfindungsgemäßen Kupplungsteilen, die axial ineinander zu stecken sind, ist es von Vorteil, wenn der Bolzen spielfrei in der Buchse sitzt, da damit eine Kraftübertragung zwischen Bolzen und Buchse über eine größtmögliche Kontaktfläche erfolgt.

Als Befestigungsmittel für eine Vollachse bzw. Gegenmutter eines Schnellspanners kann der Bolzen zudem weitere vorteilhafte Ausgestaltungen aufweisen. So kann der Bolzen z.B. auf dem von der Buchse umhüllten Zylinderstück mindestens zwei zueinander parallele Flächen aufweisen, welche eine Ansatzfläche für ein Werkzeug bilden, mit denen der Bolzen aufgeschraubt werden kann. Im verriegelten Zustand ist es danach nicht mehr möglich, den Bolzen abzuschrauben, wodurch eine einfache, aber wirksame Diebstahlsicherung erreicht wird. Auch kann der Bolzen an der Stirnfläche, an der sich das Innengewinde befindet, einen zylindrischen Abschnitt aufweisen, der als Abstandhalter fungiert, wenn die Radachse sich in sogenannten 3-D Ausfallenden befindet, welche eine Vertiefung aufweisen, in die das Radbefestigungsmittel hineinragt. So ist gewährleistet, dass der Bolzen sicher und beschädigungsfrei auch in räumlich beengten Verhältnissen montiert werden kann.

Auch vorteilhaft kann eine spezielle Ausgestaltung der den Bolzen aufnehmenden Stirnfläche der Buchse sein, bei der sie eine axial ausgeformte Manschette aufweist, die im aufgesteckten und verriegelten Zustand die Montageflächen des Bolzens soweit überdeckt, dass der Ansatz eines Werkzeuges zum Demontieren des Bolzens nicht mehr möglich ist.

Die Kupplungsteile sind im gekoppelten Zustand axial zueinander fixiert. Dies wird bei einer bevorzugten Ausgestaltung der Erfindung dadurch bewirkt, dass eines der Kupplungsteile mindestens eine zumindest teilweise umlaufende Schulter oder Nut aufweist, die mindestens eine erste axial wirkende Lagerfläche bildet, und am anderen Kupplungsteil ein mit der ersten axial wirkenden Lagerfläche zusammenwirkendes Gegenlager vorgesehen ist. Als Gegenlager kommt insbesondere auch ein mit dem anderen Kupplungsteil zusammenwirkenden Element, beispielsweise ein Verriegelungsmittel in Betracht, das vorzugsweise nicht nur eine axial wirkende Lagerfläche sondern mindestens zwei axial wirkende Lagerflächen als Gegenlager bildet und damit in Zusammenwirken mit entsprechenden axial wirkenden Lagerflächen des einen Kupplungsteils eine Bewegung des Bolzens in der Buchse in beide axiale Richtungen sperrt. Es ist auf diese Weise möglich, beide Kupplungsteile axial in beide Richtungen zu fixieren. Die Lagerflächen liegen dabei vorzugsweise innerhalb der Buchse oder Bolzenführung, wenn der Bolzen in die Buchse bzw. Bolzenführung eingesteckt ist, so dass eine kompakte Bauweise der Kupplung möglich ist.

In einer konstruktiv einfachen und daher bevorzugten Ausführungsform der Erfindung ist in der Buchse für einen Sicherungsstift eine Führung derart vorgesehen, dass der in der Führung sitzende Sicherungsstift in eine Nut eines in die Buchse eingesetzten Bolzens eingreift und ihn als Gegenlager gegen ein axiales Herausrutschen aus der Buchse sichert. Dabei kann die Buchse in einer darüber hinaus bevorzugten Ausführungsform seitensymmetrisch aufgebaut sein, indem die Führung für den Sicherungsstift mittig in der Buchse angeordnet ist. Damit ist ein Aufstecken der Buchse auf den Bolzen von beiden Stirnseiten der Buchse her möglich.

Zur vereinfachten Handhabung sind die Verriegelungsmittel erfindungsgemäß so ausgebildet, dass sie beim Aufstecken der Buchse auf den Bolzen automatisch einrasten und die Kupplungsteile sicher miteinander verbinden. Des Weiteren sind Entriegelungsmittel vorgesehen, um die Verriegelungsmittel zu entriegeln, so dass die Kupplungsteile voneinander gelöst werden können. Die erfindungsgemäße Kupplung ist somit als Steckkupplung ausgebildet, die aufgrund der automatisch einrastenden Verriegelungsmittel automatisch geschlossen ist, ohne dass es weiterer Handgriffe bedarf. Damit können, anders als bei der aus der US 6,099,008, die Kupplungsteile weitestgehend einhändig und mittels eines Handgriffs miteinander verbunden werden. Hierfür kann das Gegenlager vorzugsweise ein federelastisches Element und/oder federnd gelagert sein und als automatisch einrastendes Verriegelungsmittel wirken. So kann das Gegenlager beispielsweise durch federnd gelagerte Rastnasen ausgebildet sein, die mit einem der Kupplungsteile fest verbunden sind und die in gekoppeltem Zustand in eine zumindest teilweise umlaufende Nut im anderen Kupplungsteil eingreifen.

Ist im Bolzen eine zumindest teilweise umlaufende Nut vorgesehen, können in einer weiteren bevorzugten Ausgestaltung zwei Bügel innerhalb der Buchse als Gegenlager vorgesehen sein, die darin quer sowie zu beiden Seiten zur Längsachse der Buchse angeordnet sind. Die Bügel können wahlweise federelastisch ausgebildet und/oder federnd gelagert sein. Ist der Bolzen zwischen die federnd gelagerten bzw. federelastischen Bügel innerhalb der Buchse eingesetzt, wird er von gegenüberliegenden Seiten innerhalb der Buchse gehalten und ist somit optimal gegen ein axiales Herausrutschen aus der Buchse gesichert. Gerade bei einer solchen Ausführungsform, aber nicht nur dann, ist es von Vorteil, wenn sich der Bolzen an seinem in die Buchse einzusteckenden Ende insbesondere in einem Winkel von etwa 45° verjüngt. Er kann dann mit seinem Ende zwischen die federnd gelagerten bzw. federelastischen Bügel eingedrückt werden, wodurch sich die Bügel auseinander schieben und bei Erreichen der Endposition in der zumindest teilweise umlaufenden Nut im Bolzen einrasten. Grundsätzlich ist es im Übrigen auch möglich, lediglich einen federelastisch ausgebildeten oder federnd gelagerten Bügel in der Buchse vorzusehen, der nur von einer Seite in die Nut eingreift und dann den Bolzen ähnlich wie ein Sicherungsstift gegen ein axiales Herausrutschen oder Verrutschen sichert.

Ist in der Buchse innenseitig eine umlaufende Nut vorgesehen, können am Bolzen beispielsweise Sperrkugeln vorgesehen sein, die, sobald sie bei Einschieben des Bolzens in die Buchse die umlaufende Nut erreichen, in diese eingreifen und damit den Bolzen gegen ein Herausrutschen aus der Buchse sichern. Dieses Wirkprinzip lässt sich auch umgekehrt mit Nut im Bolzen und federnd gelagerten Sperrkugeln in der Buchse verwirklichen.

In einer anderen bevorzugten Ausbildung können die Verriegelungsmittel buchsenseitig ein vorgespanntes Rastelement aufweisen, das ausgelöst wird, sobald der Bolzen in die Buchse eingesetzt ist. Das Rastelement kann beispielsweise ein Bügel sein, der zunächst den Weg zum Einsetzen des Bolzens in die Buchse frei gibt und dann nach Auslösen den Bolzen umgreift, ähnlich wie der Riegel eines Kofferraumschlosses eines PKWs. In einem solchen Fall kann es zudem vorteilhaft sein, wenn der Bolzen an seinem Ende statt einer Nut eine Schulter aufweist, die in eine entsprechende Ausnehmung in der Buchse eingreift. In diesem Fall ist die Buchse so auszugestalten, dass die Bolzen quer zur Längsachse der Buchse in diese eingesetzt werden kann.

Erfindungsgemäß weist die Buchse eine seitliche Ausnehmung auf, durch die der Bolzen quer zur Längsachse der Buchse in diese einsetzbar ist. Wenn die Buchse ortsfest mit dem Fahrzeug verbunden ist, kann auf eine stirnseitige Öffnung der Buchse verzichtet werden, wenn der Bolzen nicht stirnseitig, sondern an seiner Mantelfläche mit der Deichsel verbunden ist und die Verriegelungsmittel dergestalt sind, dass sie den Bolzen sicher gegen ein Herausrutschen aus der seitlichen Öffnung der Buchse halten.

Natürlich weist das deichselseitige Kupplungsteil vorzugsweise ein oder mehrere weitere Gelenkmittel auf, so dass der Freiheitsgrad der Kupplung größer 1 ist. So kann beispielsweise ein mit dem deichselseitigen Kupplungsteil verbundenes und insbesondere daran angeordnetes erstes Drehgelenk vorgesehen sein, dessen Drehachse im Wesentlichen orthogonal zur Längsachse des Bolzens verläuft. In einer vereinfachten Bauweise ist dieses erste Drehgelenk so ausgestaltet, dass die in ihm enthaltene Buchse zur Aufnahme des Bolzens seitensymmetrisch aufgebaut ist, indem der Verriegelungsbolzen mittig in der Buchse angeordnet ist. In Ergänzung hierzu kann ein weiteres mit der Buchse verbundenes, insbesondere am ersten Drehgelenk angrenzendes zweites Drehgelenk vorgesehen sein, dessen Drehachse orthogonal zu der des ersten Drehgelenks und der Längsachse des Bolzens verläuft. Dabei ergibt sich eine besonders kompakte Bauform, wenn die Drehachse des ersten Drehgelenks die Längsachse des Bolzens schneidet.

Alternativ oder in Ergänzung zu dem einen oder den mehreren beschriebenen nachfolgenden Drehgelenken des deichselseitigen Kupplungsteils kann ein quer zur Längsachse der Kupplungsteile angeordnetes elastisches oder federelastisches Verbindungselement zwischen Deichsel und deichselseitigem Kupplungsteil, insbesondere eine Spiralfeder und/oder ein Elastomergelenk vorgesehen sein.

In noch einer bevorzugten Ausgestaltung weist die erfindungsgemäße Kupplung ein Gehäuse auf, in das die Buchse eingesetzt ist und an dem das erste Drehgelenk und/oder das Verbindungselement ausgebildet sind.

Außerdem kann im Gehäuse in einer weiteren bevorzugten Ausführungsform ein abschließbares Schloss zum Blockieren des Entriegelungsmittels oder zum Sichern beider Kupplungsteile im Gehäuse als Diebstahlschutz vorgesehen sein.

Um eine äußerst einfache Bedienung der erfindungsgemäßen Kupplung zu gewährleisten, weisen die Entriegelungsmittel mindestens einen Betätigungsknopf auf, mit dem die automatisch eingerasteten Verriegelungsmittel, insbesondere durch eine einmalige Betätigung, voneinander gelöst werden, so dass die Kupplungsmittel voneinander getrennt werden können. Hier ist beispielsweise ein Mechanismus verwendbar, bei dem durch Betätigen des Druckknopfes ein oder mehrere Stifte in die Verriegelungsmittel eingreifen und sie entgegen ihrer Wirkrichtung bewegen, so dass der Bolzen in der Buchse wieder freigegeben wird.

Die erfindungsgemäße Kupplung ist insbesondere zum Anhängen von Fahrradanhängern an Fahrräder, auch solche mit (elektrischem) Hilfsantrieb, geeignet. Bevorzugt sind die beiden voneinander lösbaren Kupplungsteile wahlweise parallel zur Längsachse einer hinteren Radnabe des Fahrzeugs oder fluchtend mit der Längsachse dieser Radnabe angeordnet.

Im Folgenden werden einzelne Aspekte der Erfindung anhand von Figuren, von denen allerdings keine die beanspruchte Erfindung zeigt, näher erläutert. Es zeigen:
- Fig. 1: eine Deichsel mit einer an einem ihrer Enden angeordneten Kupplung mit einer symmetrisch ausgeführten Buchse in perspektivischer Ansicht;
- Fig. 2: die Kupplung der in Figur 1 dargestellten Deichsel in anderer perspektivischer Ansicht;
- Fig. 3: die in den Figuren 1 und 2 dargestellte Kupplung ohne Gehäusemantel in weiterer perspektivischer Ansicht;
- Fig. 4: die Kupplung in der in Figur 3 gezeigten perspektivischen Ansicht mit transparenter Darstellung des Mantels eines Folgegelenks;
- Fig. 5: eine Ausführungsform der Kupplung mit einem die Buchse aufnehmenden Gehäuse in perspektivischer Ansicht;
- Fig. 6: eine andere perspektivische Ansicht der in Figur 5 dargestellten Kupplung;
- Fig. 7: eine dritte perspektivische Ansicht der in Figur 5 dargestellten Ausführungsform ohne Gehäusemantel;
- Fig. 8a: eine perspektivische Ansicht der in den Figuren 5 bis 7 dargestellten Buchse ohne umgebenden Gehäusemantel;
- Fig. 8b: eine Teilansicht des in den Figuren 7 und 8a dargestellten Verriegelungsmechanismus; und
- Fig. 9: eine weitere Teilansicht der in den Figuren 5 bis 8 dargestellten Ausführungsform.

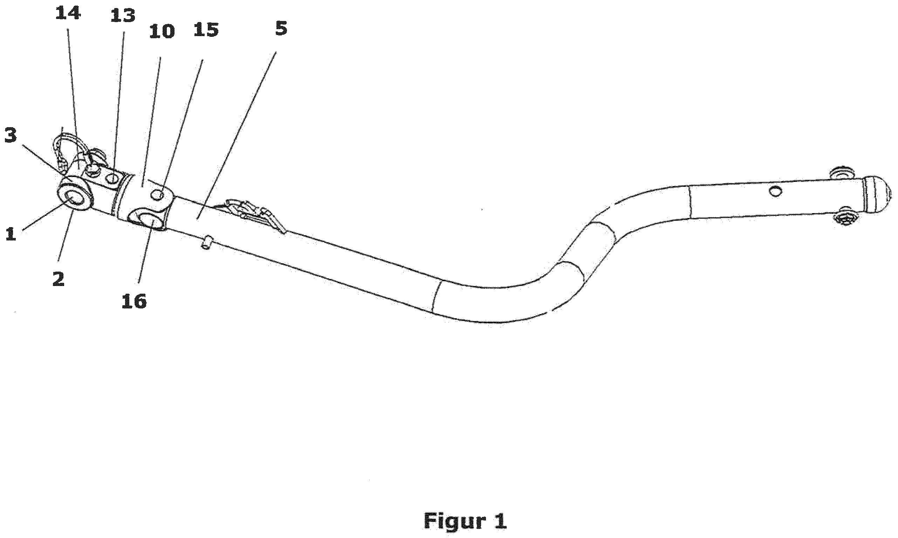

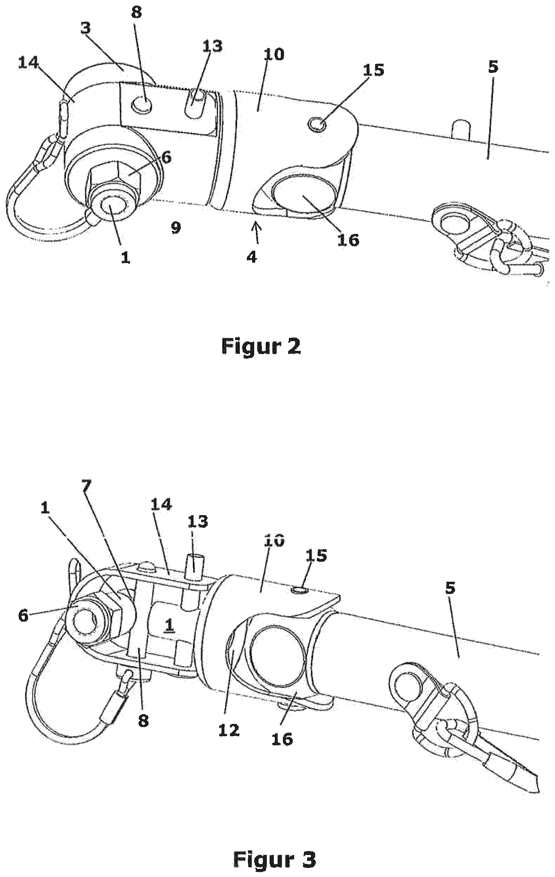

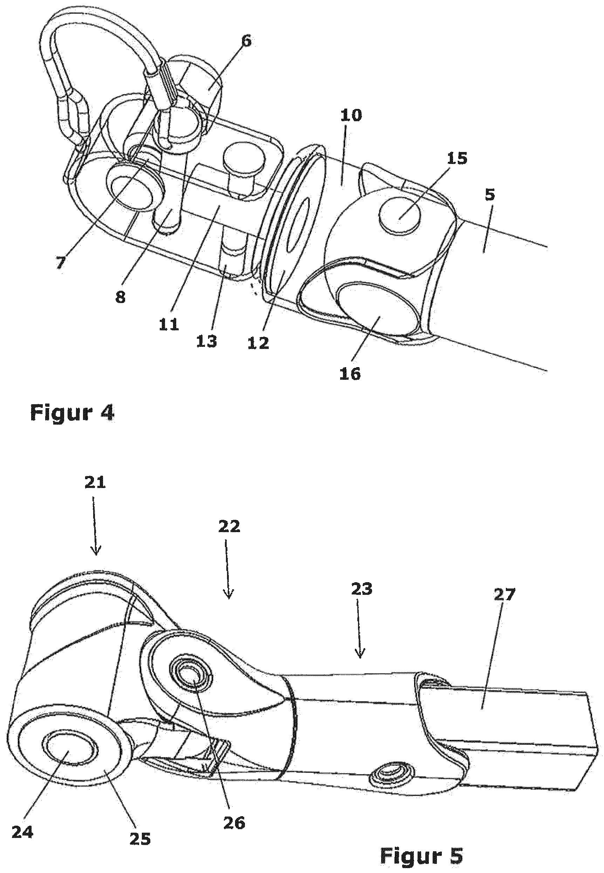

Die Figuren 1 bis 4 zeigen eine erste, konstruktiv einfache Ausführungsform einer Kupplung. Während Figur 1 eine Gesamtansicht einer Deichsel mit einer an ihrem Kopf angeordneten Kupplung in einer Perspektive zeigt, zeigt Figur 2 den symmetrisch aufgebauten Kopf der Deichsel mit der Kupplung in anderer Perspektive. Figur 3 zeigt den Deichselkopf samt Kupplung in einer weiteren Perspektive, wobei das Gehäuse der Kupplung nicht dargestellt ist, um die Anordnung und Ausgestaltung der Freiheitsgrade bzw. der zu ihrer Realisierung erforderlichen Drehgelenke besser darstellen zu können. Schließlich zeigt Figur 4 den Deichselkopf samt Kupplung in noch einer anderen Perspektive. Hierin wurde zur besseren Darstellung des Aufbaus der Kupplung nur das Gehäuse weggelassen und der Mantel eines Folgegelenks der Kupplung transparent dargestellt.

Die Ausführungsform weist einen fahrzeugseitigen, im Wesentlichen rotationssymmetrischen Bolzen 1 auf, der in einer deichselseitigen Buchse 2 sitzt. Die Buchse 2 ist Bestandteil eines Gehäuses 3. Am Gehäuse schließt sich quer zur Längsachse des Bolzens 1 eine kardanisch wirkende Gelenkkombination 4 an, über die das Gehäuse 3 mit der Deichsel 5 verbunden ist.

Buchse 2 und Bolzen 1 bilden ein Drehgelenk, dessen Drehachse vorzugsweise fluchtend zu einer hinteren Radachse des Fahrzeugs angeordnet wird und damit in der Horizontalen verläuft. Die Drehachsen der sich am Gehäuse anschließenden Gelenkkombination 4 verlaufen zueinander und zur Längsachse der Buchse 2 orthogonal, so dass der Freiheitsgrad der Kupplung drei ist.

Wie insbesondere in den Figuren 2 bis 4 zu sehen ist, ist der Bolzen 1 an seinem dem Fahrzeug zugewandten Ende als Mutter 6 ausgebildet. Damit wird der Bolzen 1 auf das Ende einer Achse eines hinteren Rades eines Fahrzeugs, insbesondere auf die Hinterradachse eines Fahrrads, aufgeschraubt und kann sogar eine herkömmliche Radmutter ersetzen.

In einem zentralen Bereich des Bolzens 1 ist eine umlaufende Nut 7 vorgesehen. In diese Nut greift ein Sicherungsstift 8 ein, der in das Gehäuse 3 lösbar eingesteckt ist und den Bolzen 1 gegen ein axiales Verschieben sichert. Zum Einstecken des Sicherungsstiftes sind im Gehäuse miteinander fluchtende Bohrungen vorgesehen, und die Buchse 2 weist im Bereich des Eingriffs des Sicherungsstiftes 8 in die Nut 7 des Bolzens 1 eine Öffnung auf. Der Kopf des Sicherungsstiftes 8 ist mit einem Band am Gehäuse 3 befestigt.

Der Sicherungsstift 8 ist in einem sich quer zur Längsachse des Bolzens 1 erstreckenden Teils 9 des Gehäuses 3 gehalten. Das stirnseitige Ende dieses Gehäuseteils 9 ist als Lochscheibe ausgebildet, ebenso wie die daran anliegende Stirnseite eines sich anschließenden Mantelteils 10 für die Gelenkkombination 4. Durch die Lochscheiben greift ein weiterer Bolzen 11, an dessen einem Ende eine Scheibe 12a angeordnet ist, die an der Innenseite der Lochscheibe des Mantelteils 10 anliegt. Der Bolzen 11 ist im Gehäuse 3 durch einen darin eingelassenen Stift 13, der durch den Bolzen 11 hindurch gesteckt ist, gesichert. Mit dieser Anordnung liegt das Mantelteil 10 an dem Gehäuse 3 an und ist gegenüber dem Gehäuse 3 um eine durch den Bolzen 11 definierte Rotationsachse drehbar, so dass die Kupplung hierdurch einen zweiten Freiheitsgrad erhält. Die Rotationsachse des Mantelteils 10 verläuft orthogonal zur Längsachse des Bolzens 1 und schneidet diese.

Das Gehäuse 3, das überwiegend aus einem Kunststoff besteht, ist durch einen metallischen, U-förmigen Bügel 14 verstärkt, der den die Buchse 2 aufnehmenden Gehäuseteil und den sich seitlich anschließenden Gehäuseteil 9 einfasst und insbesondere die für den Sicherungsstift 8 und den Stift 13 vorgesehenen Bohrungen im Gehäuse verstärkt und die Stifte gegen ein Ausbrechen aus dem Gehäuse sichert.

Das Mantelteil 10 nimmt das Angelstück 15 eines weiteren Drehgelenks auf, dessen Gegenstück vom Deichselkopf 16 gebildet wird. Die Drehachse des Angelstücks 15 verläuft orthogonal zur Längsachse des Bolzens 1 und zur durch den Bolzen 11 definierte Rotationsachse. Damit hat die Kupplung einen dritten Freiheitsgrad.

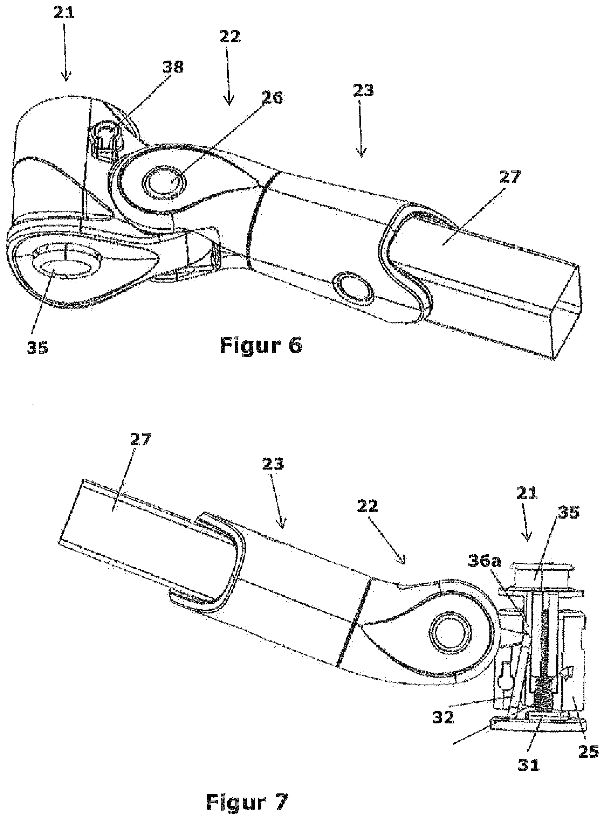

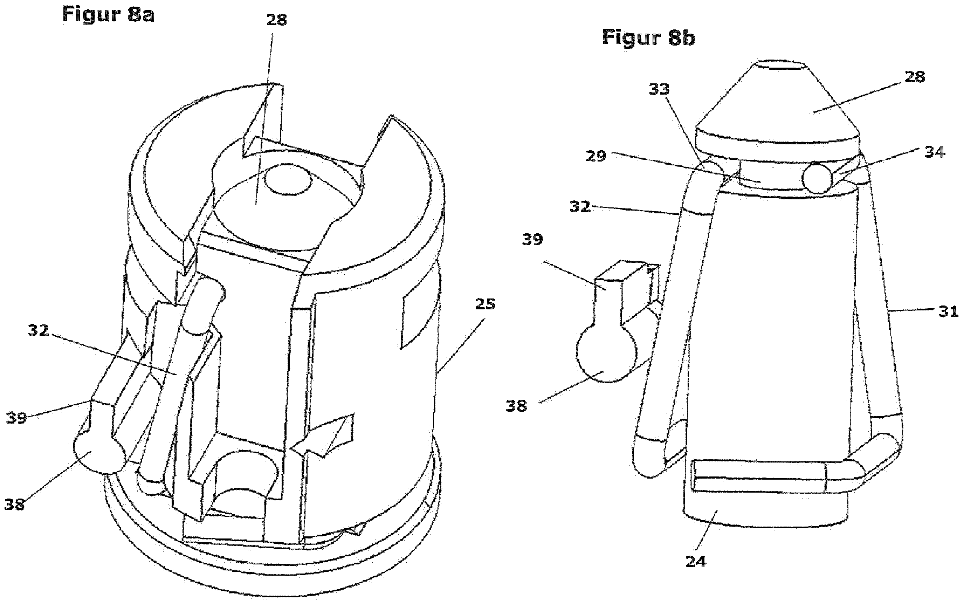

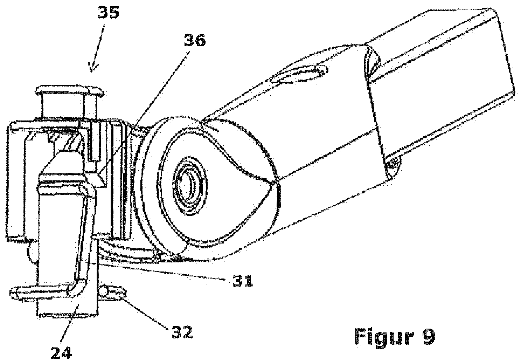

Während das Ausführungsbeispiel der Figuren 1 bis 4 eine konstruktiv einfache Ausführungsform der Kupplung ist, ist die in den Figuren 5 bis 9 dargestellte Ausführungsform im konstruktiven Aufbau aufwändiger, dafür aber in der Handhabung deutlich vereinfacht. Die Figuren 5 und 6 zeigen verschiedene perspektivische Ansichten des Deichselkopfes samt Kupplung. Figur 7 zeigt eine weitere perspektivische Ansicht des Deichselkopfes samt Kupplung, allerdings ist hier das Gehäuse der Kupplung nicht dargestellt. Figur 8a zeigt die Buchse der in den Figuren 5 bis 7 dargestellten Kupplung mit einem darin eingesetzten Bolzen sowie einem Teil der Verriegelungsmittel, die den Bolzen in der Buchse sichern, und einem Teil eines Schlossriegels. Figur 8b entspricht der Darstellung der Figur 8a, allerdings ist hier die Buchse nicht dargestellt. Schließlich zeigt Figur 9 den Deichselkopf samt Kupplung der Figuren 5 bis 7, wobei zu Erläuterungszwecken das Gehäuse der Kupplung und die Buchse nicht dargestellt sind.

Die Kupplung dieser in den Figuren 5 bis 9 dargestellten zweiten Ausführungsform kann in drei Abschnitte unterteilt werden, einen Kupplungskopf 21, ein Zwischenstück 22 und einen Deichselkopf 23.

Der Kupplungskopf 21 nimmt einen am Fahrzeug befestigten Bolzen 24 in einer Buchse 25 auf, in der der Bolzen 24 drehbar gelagert ist. Kupplungskopf 21 und Zwischenstück 22 sind über einen Gelenkbolzen 26 miteinander verbunden, dessen Achse orthogonal zur Achse des Bolzens 24 angeordnet ist. Das Zwischenstück 22 und der Deichselkopf sind über einen weiteren (nicht dargestellten) Gelenkbolzen miteinander verbunden, der axial zum Deichselende 27 und orthogonal zum Gelenkbolzen 26 angeordnet ist. Damit ist der Freiheitsgrad der Kupplung drei.

Wie insbesondere in Figur 8b, zu sehen ist, weist der Bolzen 24 einen Bolzenkopf 28 auf, der als Kegelstumpf ausgebildet ist und sich in einem Winkel von 45° zur Spitze hin verjüngt. Hinter dem Bolzenkopf 28 weist der Bolzen eine umlaufende Nut 29 auf. Im Übrigen ist der dargestellte Teil des Bolzens 24 zylindrisch. Das fahrzeugseitige Ende des Bolzens ist in keiner der Figuren 5 bis 9 dargestellt. Es kann beispielsweise ebenso wie das des Bolzen 1 der in den Figuren 1 bis 4 dargestellten Ausführungsform als Mutter ausgebildet sein. Insbesondere kann der bevorzugt sechseckig ausgestaltete Montageansatz am fahrzeugseitigen Ende des Bolzens nochmals zylindrisch abgedreht sein, um damit eine Art Abstandshülse herzustellen.

Es sind automatisch einrastende Verriegelungsmittel zum Sichern des Bolzens 24 in der Buchse 25 vorgesehen. Wie insbesondere in den Figuren 8a und 8b zu sehen ist, umfassen die Verriegelungsmittel im Wesentlichen zwei an der Außenseite der Buchse 25 gelagerte Federklammern 31, 32 mit bügelartigen Enden 33, 34, die in hierfür vorgesehene Ausnehmungen der Buchse 25 an gegenüberliegenden Seiten von außen in die Buchse eingreifen, und zwar so weit, dass sie in die umlaufende Nut 29 des Bolzens 24 eingreifen können. Beim Einsetzen des Bolzens 24 in die Buchse 25 mit dem Bolzenkopf 28 voran werden die bügelartigen Enden 33, 34 der Federklammern 31, 32 durch den Kegelstumpf auseinandergedrückt und rasten dann automatisch in der umlaufenden Nut 29 ein, so dass der Bolzen 24 nicht mehr ohne Weiteres axial aus er Buchse 25 herausgezogen werden kann.

Zum Lösen der Kupplung sind Entriegelungsmittel vorgesehen. Die Entriegelungsmittel weisen einen im Kupplungskopf 21 axial zur Längsachse des Bolzens 24 geführten Druckknopf 35 auf, der entgegen einer Federkraft (Feder nicht dargestellt) betätigbar ist. Der Druckknopf weist zwei Entriegelungsfinger 36 auf, die auf die Federklammern 31, 32 wirken und diese bei Betätigung des Druckknopfes auseinanderdrücken, so dass ihre bügelartigen Enden 33, 34 die umlaufende Nut 29 des Bolzens 24 freigeben und der Bolzen 24 aus der Buchse 25 entfernt werden kann.

Des Weiteren weist diese Ausführungsform der Kupplung ein Schloss 38 auf, mit dessen Bügel 39 eine der Federklammern 31 gegen eine Entriegelung blockiert werden kann, wenn er sich in einer Schließstellung befindet, so dass die Kupplung nicht gelöst werden kann.

## Patentansprüche

1. Kupplung zum Verbinden eines mindestens eine Deichsel aufweisenden zweispurigen Anhängers mit einem nicht motorisierten Fahrzeug oder einem lediglich einen Hilfsantrieb aufweisenden Fahrzeug, insbesondere einem Fahrrad, mit zwei zusammenwirkenden und voneinander lösbaren Kupplungsteilen, von denen das eine ortsfest mit dem Fahrzeug und das andere mit der Deichsel zu verbinden ist, wobei die zusammenwirkenden Kupplungsteile einen Bolzen (1, 24) mit zylindrischer Mantelfläche sowie eine auf den Bolzen (1, 24) aufsteckbare und den Bolzen (1, 24) zumindest teilweise umgreifende Buchse (2, 25) als zusammenwirkende Kupplungsteile aufweisen, wobei die Buchse (2, 25) mindestens eine seitliche Ausnehmung aufweist, durch die der Bolzen (1, 24) quer zur Längsachse der Buchse (2, 25) in diese einsetzbar ist, und die miteinander verbundenen Kupplungsteile um ihre gemeinsame Längsachse herum relativ zueinander drehbar sind und als Drehgelenk mit einem Freiheitsgrad wirken, wobei die Kupplungsteile Verriegelungsmittel aufweisen, mit denen die Kupplungsteile sicher miteinander verbunden werden können, , und Entriegelungsmittel vorgesehen sind, um die Verriegelungsmittel zu entriegeln, so dass die Kupplungsteile voneinander gelöst werden können, und wobei deichselseitig ein oder mehrere weitere Gelenkmittel vorgesehen sind, durch welche die Kupplung mindestens zwei weitere Freiheitsgrade erhält, **dadurch gekennzeichnet, dass** die Verriegelungsmittel so ausgebildet sind, dass sie beim Aufstecken der Buchse (25) auf den Bolzen (24) automatisch einrasten und die Kupplungsteile sicher miteinander verbinden.

2. Kupplung nach Anspruch 1, **dadurch gekennzeichnet, dass** eines der Kupplungsteile mindestens eine zumindest teilweise umlaufende Schulter oder Nut (7, 29), die mindestens eine erste axial wirkende Lagerfläche bildet, aufweist, und dass am anderen Kupplungsteil ein mit der ersten axial wirkenden Lagerfläche zusammenwirkendes Gegenlager vorgesehen ist, wobei vorzugsweise
- das Gegenlager von einem mit dem anderen Kupplungsteil zusammenwirkenden Element, insbesondere dem Verriegelungsmittel, gebildet wird, und/oder
- das Verriegelungsmittel mindestens zwei axial wirkende Gegenlagerflächen bildet und eine Bewegung des Bolzens in der Buchse in beide axiale Richtungen sperrt, und/oder
- die Lagerflächen innerhalb der Buchse (2, 25) liegen, wenn der Bolzen (1, 24) in die Buchse (2, 25) eingesteckt ist.

3. Kupplung nach Anspruch 2, **gekennzeichnet durch** eine Führung in der Buchse für einen Sicherungsstift (8) derart, dass der in der Führung sitzende Sicherungsstift (8) in die Nut (7) des in die Buchse (2) eingesetzten Bolzens (1) eingreift und ihn als Gegenlager gegen ein axiales Herausrutschen aus der Buchse sichert.

4. Kupplung nach Anspruch 1 oder 2, **dadurch gekennzeichnet**, dassdie Entriegelungsmittel mindestens einen Betätigungsknopf (35) aufweisen, mit dem die eingerasteten Verriegelungsmittel insbesondere durch eine einmalige Betätigung voneinander gelöst werden, so dass die Kupplungsmittel voneinander getrennt werden können.

5. Kupplung nach Anspruch 4, **gekennzeichnet durch** einen buchsenseitigen, vorgespannten Bügel als Verriegelungsmittel, der zunächst den Weg zum Einsetzen des Bolzens freigibt und dann nach Auslösen den Bolzen umgreift.

6. Kupplung nach Anspruch 2, 4 oder 5, **dadurch gekennzeichnet, dass** das Gegenlager ein federelastisches Element und/oder federnd gelagert ist und als Verriegelungsmittel wirkt, wobei insbesondere bevorzugt federnd gelagerte Rastnasen und/oder zwei parallele, in der Buchse quer sowie zu beiden Seiten zu ihrer Längsachse angeordnete, federelastisch ausgebildete und/oder federnd gelagerte Bügel (33, 34) als Gegenlager vorgesehen sind.

7. Kupplung nach einem der vorstehenden Ansprüche, **dadurch gekennzeichnet, dass** sich der Bolzen (24) an seinem in die Buchse (25) einzusteckenden Ende (28) insbesondere in einem Winkel von etwa 45° verjüngt, und/oder dass die Verriegelungsmittel buchsenseitig ein vorgespanntes Rastelement aufweisen, das ausgelöst wird, sobald der Bolzen in die Buchse eingesetzt ist.

8. Kupplung nach einem der vorstehenden Ansprüche, **dadurch gekennzeichnet, dass** das fahrzeugseitige Kupplungsteil axial zur Achse einer Radnabe oder parallel hierzu anzuordnen ist, wobei vorzugsweise
- das fahrzeugseitige Kupplungsteil Mittel zu seiner Befestigung am Ende der Radnabe oder mit einer am Fahrzeug gegengelagerten Verbindungsschraube aufweist, wobei darüber hinaus bevorzugt die Buchse (2) oder der Bolzen in Richtung ihrer/seiner Längsachse eine Bohrung mit einem Gewinde aufweist, mit dem sie/er auf das Ende der Radnabe oder einer Verbindungsschraube aufgeschraubt werden kann, und/oder
- der auf die Radnabe aufzuschraubende Kupplungsteil gleichzeitig die Funktion einer Radmutter erfüllt.

9. Kupplung nach einem der vorstehenden Ansprüche, **dadurch gekennzeichnet, dass**
- die Buchse den Bolzen spielfrei umgreift und/oder
- das fahrzeugseitige Kupplungsteil der Bolzen (1, 24) ist, welcher an seinem zum Fahrzeug weisenden Ende einen Ansatz als Abstandshalter aufweist, der vorzugsweise zylindrisch ausgebildet ist, und/oder
- der Bolzen im Wesentlichen zylindrisch ist und mindestens zwei jeweils zu einander parallele und in den Zylinder eingearbeitete Flächen zum Ansetzen eines Werkzeuges aufweist.

10. Kupplung nach Anspruch 7 oder einem der darauf rückbezogenen Ansprüche 8 oder 9, **dadurch gekennzeichnet, dass** der Bolzen an seiner dem Fahrzeug abgewandten Stirnfläche eine Schulter aufweist, wobei die Schulter mindestens zwei jeweils zu einander parallele eingearbeitete Flächen zum Ansetzen eines Werkzeuges aufweist.

11. Kupplung nach einem der vorstehenden Ansprüche, **gekennzeichnet durch** ein mit der Buchse verbundenes und insbesondere daran angeordnetes erstes nachfolgendes Drehgelenk, dessen Drehachse im Wesentlichen orthogonal zur Längsachse des Bolzens verläuft.

12. Kupplung nach Anspruch 11, **gekennzeichnet durch**
- ein weiteres mit der Buchse verbundenes, insbesondere am ersten nachfolgenden Drehgelenk angrenzendes zweites nachfolgendes Drehgelenk, dessen Drehachse orthogonal zu der des ersten nachfolgenden Drehgelenks und der Längsachse des Bolzens verläuft, wobei vorzugsweise die Drehachse des ersten nachfolgenden Drehgelenks die Längsachse des Bolzens schneidet, und/oder
- ein quer zur Längsachse der Kupplungsteile angeordnetes elastisches Verbindungselement zwischen Deichsel und deichselseitigem Kupplungsteil, insbesondere eine Spiralfeder und/oder einem Elastomergelenk.

13. Kupplung nach Anspruch 12, **gekennzeichnet durch** ein Gehäuse (3), in das die Buchse (2, 25) eingesetzt ist und an dem das erste nachfolgende Drehgelenk und/oder das Verbindungselement ausgebildet ist.

14. Kupplung nach einem der vorstehenden Ansprüche, **gekennzeichnet durch** ein abschließbares Schloss (38) als Verriegelungsmittel oder zum Blockieren des Entriegelungsmittels

15. System aus Fahrzeug und einem eine Deichsel aufweisenden Fahrzeuganhänger mit einer Kupplung zur Verbindung der Deichsel mit dem Fahrzeug gemäß einem der vorstehenden Ansprüche, wobei vorzugsweise die Längsachse der zusammenwirkenden Kupplungsteile parallel zu einer Fahrzeugradachse oder hiermit fluchtend angeordnet ist.

## Claims

1. Coupling for connecting a two-track trailer having at least one drawbar to a nonmotorized vehicle or a vehicle having only an auxiliary drive, in particular a bicycle, having two cooperating coupling parts which can be disconnected from one another, one of which is to be connected fixedly to the vehicle and the other to the drawbar, the cooperating coupling parts having a bolt (1, 24) with a cylindrical outer surface as well as a bushing (2, 25), which can be fitted onto the bolt (1, 24) and at least partially surrounds the bolt (1, 24), as cooperating coupling parts, the bushing (2, 25) having at least one lateral recess through which the bolt (1, 24) can be inserted into the bushing (2, 25) transversely with respect to the longitudinal axis of the latter and the interconnected coupling parts are rotatable relative to one another about their common longitudinal axis and act as a swivel joint with one degree of freedom, the coupling parts having locking means by which the coupling parts can be securely connected to one another, and unlocking means being provided to unlock the locking means so that the coupling parts can be released from one another, and wherein one or more further joint means are provided on the drawbar side, by means of which the coupling is given at least two further degrees of freedom, **characterized in that** the locking means are designed in such a way that they automatically engage when the bushing (25) is pushed onto the pin (24) and securely connect the coupling parts to one another.

2. Coupling according to claim 1, **characterized in that** one of the coupling parts has at least one at least partially circumferential shoulder or groove (7, 29) which forms at least one first axially acting bearing surface, and **in that** on the other coupling part a counterbearing is provided which interacts with the first axially acting bearing surface, wherein preferably
- the counter-bearing is formed by an element cooperating with the other coupling part, in particular the locking means, and/or
- the locking means forms at least two axially acting counter-bearing surfaces and blocks a movement of the bolt in the bushing in both axial directions, and/or
- the bearing surfaces are inside the bushing (2, 25) when the bolt (1, 24) is inserted into the bushing (2, 25).

3. Coupling according to claim 2, **characterized by** a guide in the bushing for a locking pin (8) in such a way that the locking pin (8) seated in the guide engages in the groove (7) of the pin (1) inserted in the bushing (2) and secures it as a counterbearing against axial slipping out of the bushing.

4. Coupling according to claim 1 or 2, **characterized in that** the unlocking means comprise at least one actuating button (35) with which the engaged locking means are released from each other, in particular by a single actuation, so that the coupling means can be separated from each other.

5. A coupling according to claim 4, **characterized by** a bushing-side, preloaded bracket as a locking means, which first clears the way for insertion of the bolt and then grips around the bolt after release.

6. Coupling according to claim 2, 4 or 5, **characterized in that** the counter bearing is a spring-elastic element and/or spring-mounted and acts as a locking means, in particular preferably spring-mounted latching lugs and/or two parallel, spring-elastic and/or spring-mounted stirrups (33, 34) arranged in the bushing transversely as well as on both sides to its longitudinal axis being provided as counter bearings.

7. Coupling according to one of the preceding claims, **characterized in that** the bolt (24) tapers at its end (28) to be inserted into the bushing (25), in particular at an angle of about 45°, and/or **in that** the locking means have a preloaded latching element on the bushing side which is released as soon as the bolt is inserted into the bushing.

8. Coupling according to one of the preceding claims, **characterized in that** the vehicle-side coupling part is to be arranged axially to the axis of a wheel hub or parallel thereto, wherein preferably
- the coupling part on the vehicle side has means for fixing it to the end of the wheel hub or to a connecting bolt counter-supported on the vehicle, the bushing (2) or the bolt also preferably having, in the direction of its longitudinal axis, a bore with a thread by means of which it can be screwed onto the end of the wheel hub or a connecting bolt, and/or
- the coupling part to be screwed onto the wheel hub simultaneously fulfills the function of a wheel nut.

9. Coupling according to one of the preceding claims, **characterized in that**
- the bushing engages around the bolt without play and/or
- the coupling part on the vehicle side is the bolt (1, 24), which at its end facing the vehicle has a projection as spacer, which is preferably cylindrical, and/or
- the bolt is substantially cylindrical and has at least two surfaces, each parallel to the other and machined into the cylinder, for the application of a tool.

10. Coupling according to claim 7 or one of the claims 8 or 9 related thereto, **characterized in that** the bolt has a shoulder on its end face facing away from the vehicle, the shoulder having at least two machined-in surfaces, each parallel to one another, for the application of a tool.

11. Coupling according to one of the preceding claims, **characterized by** a first subsequent pivot joint connected to the bushing and in particular arranged thereon, the axis of rotation of which is substantially orthogonal to the longitudinal axis of the pin.

12. Coupling according to claim 11, **characterized by**
- a further second subsequent pivot joint connected to the bushing, in particular adjacent to the first subsequent pivot joint, the axis of rotation of which is orthogonal to that of the first subsequent pivot joint and the longitudinal axis of the bolt, preferably the axis of rotation of the first subsequent pivot joint intersecting the longitudinal axis of the bolt, and/or
- an elastic connecting element arranged transversely to the longitudinal axis of the coupling parts between the drawbar and the coupling part on the drawbar side, in particular a spiral spring and/or an elastomer joint.

13. Coupling according to claim 12, **characterized by** a housing (3) in which the bushing (2, 25) is inserted and on which the first subsequent pivot joint and/or the connecting element is formed.

14. Coupling according to any one of the preceding claims, **characterized by** a lockable lock (38) as locking means or for blocking the unlocking means.

15. A system of a vehicle and a vehicle trailer having a drawbar, comprising a coupling for connecting the drawbar to the vehicle according to any one of the preceding claims, wherein preferably the longitudinal axis of the cooperating coupling parts is arranged parallel to or aligned with a vehicle wheel axis.

## Revendications

1. Attelage destiné à relier une remorque à deux roues sur essieu comprenant au moins un timon à un véhicule non motorisé ou à un véhicule présentant seulement un entraînement auxiliaire, en particulier une bicyclette, ledit attelage comprenant deux parties d'attelage entrant en coopération et pouvant être détachées l'une de l'autre, parmi lesquelles l'une est à fixer à demeure au véhicule et l'autre à relier au timon, dans lequel les parties entrant en coopération présentent un boulon (1, 24) avec une surface cylindrique ainsi qu'une douille (2, 25) pouvant être enfichée sur le boulon (1, 24) et entourant au moins en partie le boulon (1, 24) en tant que parties d'attelage entrant en coopération, dans lequel la douille (2, 25) présente au moins un évidement latéral, à travers lequel le boulon (1, 24) peut être inséré transversalement à l'axe longitudinal de la douille (2, 25) dans celle-ci, et les parties d'attelage reliées l'une à l'autre peuvent être amenées à tourner l'une par rapport à l'autre autour de leur axe longitudinal commun et agissent comme une articulation rotoïde présentant un degré de liberté, dans lequel les parties d'attelage comportent des moyens de verrouillage par l'intermédiaire desquels les parties d'attelage peuvent être reliées solidement l'une à l'autre, et des moyens de déverrouillage sont prévus afin de déverrouiller les moyens de verrouillage, de sorte que les parties d'attelage peuvent être détachées l'une de l'autre, et dans lequel un ou plusieurs autres moyens d'articulation sont prévus côté timon, par l'intermédiaire desquels l'attelage reçoit au moins deux autres degrés de liberté, **caractérisé en ce que** les moyens de verrouillage sont réalisés de telle sorte que lors de l'enfichage de la douille (25) sur le boulon (24) ils s'encliquètent automatiquement et relient les parties d'attelage solidement l'une à l'autre.

2. Attelage selon la revendication 1, **caractérisé en ce qu'**une des parties d'attelage présente au moins un épaulement ou une rainure (7, 29) au moins en partie périphérique, qui forme au moins une première surface d'appui agissant axialement, et qu'un contre-appui coopérant avec la première surface d'appui agissant axialement est prévu sur l'autre partie d'attelage, dans lequel de préférence
- le contre-appui est formé par un élément coopérant avec l'autre partie d'attelage, en particulier le moyen de verrouillage, et/ou
- le moyen de verrouillage forme au moins deux surfaces de contre-appui agissant axialement et empêche un déplacement du boulon dans la douille dans les deux directions axiales, et/ou
- les surfaces d'appui se situent à l'intérieur de la douille (2, 25), lorsque le boulon (1, 24) est introduit dans la douille (2, 25).

3. Attelage selon la revendication 2, **caractérisé par** un guidage dans la douille pour une broche de blocage (8), de telle manière que la broche de blocage (8) reposant dans le guidage s'engage dans la rainure (7) du boulon (1) inséré dans la douille (2) et bloque ce dernier en tant que contre-appui pour l'empêcher de s'extraire axialement de la douille en glissant.

4. Attelage selon la revendication 1 ou 2, **caractérisé en ce que** les moyens de verrouillage présentent au moins une tête d'actionnement (35) par l'intermédiaire de laquelle les moyens de verrouillage encliquetés sont détachés les uns des autres en particulier à la suite d'un seul actionnement, de sorte que les moyens d'attelage peuvent être séparés les uns des autres.

5. Attelage selon la revendication 4, **caractérisé par** un étrier précontraint, côté timon, comme moyen de verrouillage, qui libère tout d'abord la voie pour l'insertion du boulon et entoure ensuite le boulon après le déclenchement.

6. Attelage selon la revendication 2, 4 ou 5, **caractérisé en ce que** le contre-appui est un élément élastique et/ou monté sur ressort et agit en tant que moyen de verrouillage, dans lequel en particulier des becs d'encliquetage montés de préférence sur ressort et/ou deux étriers (33, 34) parallèles disposés dans la douille transversalement ainsi que des deux côtés par rapport à leur axe longitudinal, réalisés de manière élastique et/ou montés sur ressort, sont prévus en tant que contre-appuis.

7. Attelage selon l'une quelconque des revendications précédentes, **caractérisé en ce que** le boulon (24) s'amincit à son extrémité (28) à introduire dans la douille (25) en particulier selon un angle de sensiblement 45°, et/ou que les moyens de verrouillage présentent côté douille un élément d'encliquetage précontraint, qui est déclenché dès que le boulon est inséré dans la douille.

8. Attelage selon l'une quelconque des revendications précédentes, caractérisé en ce la partie d'attelage côté véhicule est à agencer axialement par rapport à l'axe d'un moyeu de roue ou parallèlement à celle-ci, dans lequel de préférence
- la partie d'attelage côté véhicule présente des moyens pour sa fixation à l'extrémité du moyeu de roue ou avec une vis d'assemblage contre-montée sur le véhicule, dans lequel en outre de préférence la douille (2) ou le boulon présente en direction de son axe longitudinal un trou pourvu d'un filet, filet au moyen duquel elle/il peut être vissé(e) sur l'extrémité du moyeu de roue ou d'une vis d'assemblage, et/ou
- la partie d'attelage à visser sur le moyeu de roue assure simultanément la fonction d'un écrou de roue.

9. Attelage selon l'une quelconque des revendications précédentes, **caractérisé en ce que**
- la douille entoure le boulon sans jeu et/ou
- la partie d'attelage côté véhicule est le boulon (1, 24), lequel présente à son extrémité tournée vers le véhicule une partie saillante faisant office d'élément d'écartement, laquelle est de préférence cylindrique, et/ou
- le boulon est sensiblement cylindrique et présente au moins deux surfaces respectivement parallèles l'une à l'autre et ménagées dans le cylindre pour la mise en place d'un outil.

10. Attelage selon la revendication 7 ou l'une des revendications 8 ou 9 rattachées à celle-ci, **caractérisé en ce que** le boulon présente sur sa surface frontale opposée au véhicule un épaulement, dans lequel l'épaulement présente au moins deux surfaces ménagées respectivement parallèles l'une à l'autre pour la mise en place d'un outil.

11. Attelage selon l'une quelconque des revendications précédentes, **caractérisé par** une première articulation rotoïde reliée à la douille et agencée en particulier sur celle-ci, dont l'axe de rotation s'étend sensiblement perpendiculairement à l'axe longitudinal du boulon.

12. Attelage selon la revendication 11, **caractérisé par**
- une autre deuxième articulation rotoïde suivante qui est reliée à la douille et en particulier adjacente à la première articulation rotoïde suivante et dont l'axe de rotation s'étend perpendiculairement à celui de la première articulation rotoïde suivante et de l'axe longitudinal du boulon, dans lequel l'axe de rotation de la première articulation rotoïde suivante coupe de préférence l'axe longitudinal du boulon, et/ou
- un élément de liaison élastique agencé transversalement à l'axe longitudinal des parties d'attelage entre le timon et la partie d'attelage côté timon, en particulier un ressort spiral et/ou une articulation élastomère.

13. Attelage selon la revendication 12, **caractérisé par** un logement (3), dans lequel la douille (2, 25) est insérée et sur lequel la première articulation rotoïde suivante et/ou l'élément de liaison est/sont formés.

14. Attelage selon l'une quelconque des revendications précédentes, **caractérisé par** une serrure (38) pouvant être fermée faisant office de moyen de verrouillage ou destinée au blocage du moyen de déverrouillage.

15. Système composé d'un véhicule et d'une remorque de véhicule présentant un timon, laquelle remorque est pourvue d'un attelage pour la liaison du timon au véhicule selon l'une quelconque des revendications précédentes, dans lequel l'axe longitudinal des parties d'attelage entrant en coopération est de préférence disposé parallèlement à un axe de roue de véhicule ou en alignement avec celui-ci.
